(19) Europäisches Patentamt
European Patent Office
Office européen des brevets

(11) **EP 2 592 057 A1**

(12) **EUROPEAN PATENT APPLICATION**
published in accordance with Art. 153(4) EPC

(43) Date of publication:
**15.05.2013 Bulletin 2013/20**

(51) Int Cl.:
***C03C 19/00*** (2006.01)   ***G02F 1/1333*** (2006.01)

(21) Application number: **11803355.4**

(22) Date of filing: **21.02.2011**

(86) International application number:
**PCT/JP2011/053749**

(87) International publication number:
**WO 2012/005019 (12.01.2012 Gazette 2012/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2010 JP 2010155987**

(71) Applicant: **Asahi Glass Company, Limited
Tokyo 100-8405 (JP)**

(72) Inventors:
• **MIYAMOTO Mikio
Tokyo 100-8405 (JP)**

• **TORII Hideharu
Tokyo 100-8405 (JP)**
• **KIMURA Tomonori
Tokyo 100-8405 (JP)**

(74) Representative: **Müller-Boré & Partner
Patentanwälte
Grafinger Straße 2
81671 München (DE)**

(54) **GLASS SUBSTRATE END SURFACE EVALUATION METHOD, GLASS SUBSTRATE END SURFACE PROCESSING METHOD, AND GLASS SUBSTRATE**

(57)   Provided are a method of evaluating an end surface of a glass substrate, which is capable of accurately evaluating properties and a state of the end surface of the glass substrate, a method of processing the end surface of the glass substrate on the basis of this evaluation method, and a glass substrate in which dust adhesion to the end surface of the glass substrate may be reduced on the basis of the processing method, and more particularly, a glass substrate in which defects such as burning defect, chipping, and cracking may be prevented from occurring on a chamfered surface on the basis of the processing method.

According to the invention, an image of the end surface Z, which is imaged by a laser microscope 14, is processed with white and black binarization to identify a recess present in the end surface and a mirror surface of the end surface as a white image and a black image, respectively, and then the properties and state of the end surface of the glass substrate are evaluated on the basis of a ratio of an area of the white image with respect to an area of the black image. According to this evaluation method, compared to an evaluation method in which reliability of a degree of precision greatly depends on the size of the recess that is present in the end surface Z, the properties and state of the end surface Z of the glass substrate G may be evaluated in a relatively accurate manner.

*FIG. 1*

EP 2 592 057 A1

**Description**

TECHNICAL FIELD

The present invention relates to a method of evaluating an end surface of a glass substrate that is used for an FPD (Flat Panel Display), a method of processing the end surface of the glass substrate, and a glass substrate.

BACKGROUND ART

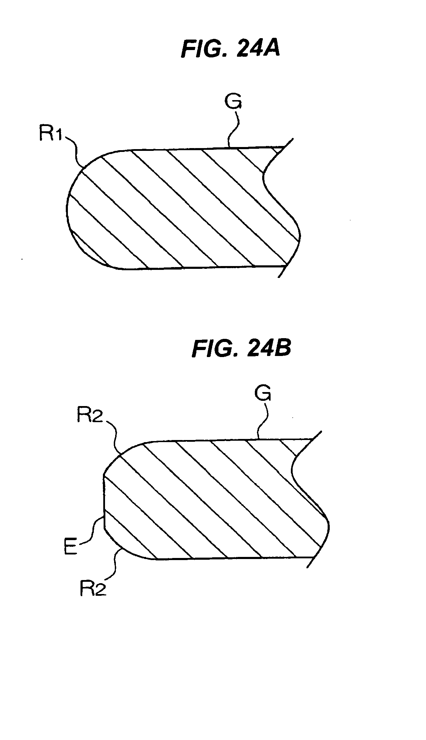

An end surface of the FPD glass substrate, which is used in a liquid crystal display, a plasma display, or the like, is chamfered with a grinding member in a manufacturing process. According to the shape of a chamfering grindstone, end surface shapes of the chamfered glass substrate are largely classified into an end surface shape having a single curved surface $R_1$ as shown in Fig. 24A and an end surface shape having a flat portion E and two curved surfaces $R_2$ and $R_2$ having the same curvature as shown in Fig. 24B. In addition, in the same drawings, a cross-section in which a chamfered end surface is enlarged is shown, and a symbol G represents the glass substrate.

However, in a case where end surface roughness of the glass substrate is large, it is known that dust such as cullet easily adheres to the end surface. There is a concern that the dust adhered to the end surface may re-adhere to a substrate surface during manufacturing of a display, and thus it is preferable to make the end surface roughness small.

For example, in the patent reference 1, a Ra value of the end surface roughness of the glass substrate is defined to 0.25 $\mu$m or less, and in the patent reference 2, the Ra value is defined to 0.1 $\mu$m or less so as to suppress the adhesion of the dust to the end surface. Measurement of the end surface roughness of the glass substrate is performed using a probe-type surface roughness meter provided with a probe as disclosed in the patent reference 2.

On the other hand, in the glass substrate, since defects such as burning defect, chipping, and cracking occur on the end surface according to the chamfer shape, the chamfer shape has also been reviewed.

For example, the patent reference 3 discloses an invention related to the chamfer shape of an outer peripheral end surface of a substrate for a hard disk. An object of the patent reference 3 is to prevent a substrate main body of the substrate for the hard disk, which is manufactured using a brittle material, such as a carbon substrate and a glass substrate, from becoming a defective article during handling thereof. Specifically, the object is to prevent defects such as flaw and cracking of the outer peripheral end surface from occurring when the outer peripheral end surface of the substrate main body comes into contact with a cassette for conveyance.

To accomplish the above-described object, the patent reference 3 discloses a substrate for a magnetic recording medium in which a chamfered portion on an outer peripheral end surface of a substrate main body having an outer diameter of 65 mm is made to have a round shape, this round chamfered portion makes up a side portion in a round shape having only one radius, and a round radius R is set to t/2 to 2t (here, t represents a plate thickness of the substrate main body). In addition, the patent reference 1 also discloses a substrate for a magnetic recording medium in which a chamfered portion has a roundness that is different at upper and lower sides of the substrate, and radii $R_1$ and $R_2$ are set to be less than t/2.

PRIOR ART REFERENCES

PATENT DOCUMENTS

Patent Reference 1: Japanese Patent No. 4370611
Patent Reference 2: JP-A-2002-160147
Patent Reference 3: JP-A-9-102122

SUMMARY OF THE INVENTION

PROBLEMS TO BE SOLVED BY THE INVENTION

In the method of evaluating the end surface of the glass substrate, in which the end surface of the glass substrate is measured by the probe-type surface roughness meter in the related art, the tip of the probe may pass over a minute recess, which is present in the end surface of the glass substrate, without entering the recess. Therefore, there is a problem in that it is difficult to accurately evaluate the properties and state of the end surface of the glass substrate. That is, in the method of evaluating the properties and state of the end surface of the glass substrate by the probe-type surface roughness meter, the reliability thereof depends greatly on the size of the recess, and thus the reliability is not superior.

On the other hand, in the case of a large-sized glass substrate, a problem, which may not be assumed in a small-sized glass substrate for a magnetic recording medium, occurs. This problem includes burning defect that occurs on the end surface of the glass substrate during the chamfering process.

The burning defect does not easily occur during chamfering process of a small-sized hard disk substrate as shown in the patent reference 3, but occurs at an FPD glass substrate having a size of 400 mm × 300 mm or more. That is, as the travel distance of a grinding member with respect to the end surface of the glass substrate becomes longer, the frequency of occurrence of the burning defect tends to increase. Particularly, in a glass substrate having a size of 1,200 mm × 1, 100 mm or more, the frequency of occurrence of the burning defect problem becomes higher.

In addition, in a case where the end surface shape is not good, in addition to the burning defect that occurs during the chamfering process, occurrence of chipping also increases. Therefore, these have become causes of deteriorating productivity of the glass substrate. In addition, depending on a degree of the burning defect or chipping, the glass substrate may be broken. Furthermore, in a case where the end surface shape is not good, there is a problem in that cracking also occurs on the processed end surface.

The present invention has been made in consideration of the above-described circumstances, and an object thereof is to provide a method of evaluating an end surface of a glass substrate, which is capable of accurately evaluating the properties and state of the end surface of the glass substrate, a method of processing the end surface of the glass substrate on the basis of this evaluation method, and a glass substrate in which dust adhesion to the end surface of the glass substrate may be reduced on the basis of the processing method, and more particularly, a glass substrate in which defects such as burning defect, chipping, and cracking may be prevented from occurring on a chamfered surface on the basis of the processing method.

MEANS FOR SOLVING THE PROBLEMS

To accomplish the above-described object, according to an aspect of the invention, there is provided a method of evaluating an end surface of a glass substrate. The method includes: imaging a predetermined area of the end surface of the glass substrate with an imaging unit; processing the imaged image with white and black binarization to identify a recess that is present in the end surface and a flat portion that becomes a mirror surface of the end surface as a white image and a black image, respectively; and evaluating properties and a state of the end surface of the glass substrate on the basis of a ratio of an area of the white image with respect to an area of the black image.

The evaluation method of the invention provides an evaluation method using an imaging unit such as a laser microscope. According to the invention, the image of the end surface, which is imaged by the imaging unit, is processed with the white and black binarization to identify the recess that is present in the end surface and the flat portion that becomes the mirror surface of the end surface as the white image and the black image, respectively. In addition, the properties and state of the end surface of the glass substrate are evaluated on the basis of the ratio of the area of the white image with respect to the area of the black image.

According to the evaluation method of the invention, compared to an evaluation method using a probe-type roughness meter in the related art in which reliability of a degree of precision greatly depends on the size of the recess that is present in the end surface, the properties and state of the end surface of the glass substrate may be evaluated in a relatively accurate manner.

In addition, in the invention, it is preferable that a threshold value of the ratio of the area of the white image with respect to the area of the black image be set to 10%.

The present inventors made a thorough investigation on the ratio to suppress the adhesion of dust to the end surface. As a result thereof, they found that when the ratio exceeds 10%, dust easily adheres, and when the ratio is 10% or less, the dust does not easily adhere. Therefore, the threshold value of the ratio is appropriately set to 10% whenever the end surface of the glass substrate is evaluated.

To accomplish the above-described object, according to another aspect of the invention, there is provided a method of processing an end surface of a glass substrate. The method includes: grinding the end surface of the glass substrate with a grinding member; imaging the ground end surface with an imaging unit; processing the imaged image with white and black binarization to identify a recess that is present in the end surface and a flat portion that becomes a mirror surface of the end surface as a white image and a black image, respectively; and controlling a grinding volume of the end surface with the grinding member so that a ratio of an area of the white image with respect to an area of the black image becomes a predetermined threshold value or less.

According to the invention, the grinding volume of the end surface with the grinding member is controlled on the basis of the ratio. That is, in a case where the ratio is larger than the threshold value, it is determined that the grinding volume (a run-in amount of the grinding member with respect to the end surface of the glass substrate) with the grinding member is small and a lot of recesses are present, and an optimal control is performed so that a finish quality becomes optimal. According to this, the quality of the end surface of the glass substrate is stabilized.

In the invention, it is preferable that the control be performed so that the threshold value of the ratio of the area of the white image with respect to the area of the black image becomes 10% or less.

According to the invention, a glass substrate in which dust does not easily adhere to the end surface of the glass substrate may be stably manufactured.

To accomplish the above-described object, according to still another aspect of the invention, there is provided a glass substrate that is processed with the method of processing an end surface of a glass substrate according to the invention.

According to the glass substrate of the invention, since dust does not easily adhere to the end surface of the glass substrate, a glass substrate with a superior quality may be provided.

To accomplish the above-described object, according to still another aspect of the invention, there is provided a glass substrate that is processed with the method of processing an end surface of a glass substrate according to the invention, wherein a size is 400 mm $\times$ 300 mm or more, a plate thickness (t) is 0.05 mm to 2.8 mm, and a trapezoidal shape, which is created by drawing three tangential lines on the end surface having a chamfered portion, satisfies the following dimensions.

$$1/3 \leq 1-2\tan\beta \times W/t \leq 4/5$$

(here, $\beta$ represents an angle of aperture (an angle made by a tangential line of a chamfered curved surface of the end surface of the glass substrate at an intersection point between a plate surface of the glass substrate and the chamfered curved surface of the end surface of the glass substrate, and the plate surface of the glass substrate, and a range thereof is 50°≤2$\beta$≤80°), and

W represents an end surface width (a length from the intersection point between the plate surface of the glass substrate and the chamfered curved surface of the end surface of the glass substrate to a tangential line drawn on the tip of the end surface of the glass substrate in a direction parallel with the plate surface of the glass substrate))

According to the invention, in regard to the glass substrates having the conditions of the size, the plate thickness (t), and the angle of aperture ($\beta$), when the glass substrate satisfying "1/3≤f/t≤4/5" is manufactured, dust does not easily adhere to the end surface of the glass substrate, and defects such as burning defect, chipping, and cracking may be prevented from occurring on the chamfered surface. In addition, the end surface of the glass substrate and the chamfered surface are the same as each other, the length of a line segment connecting two intersection points between tangential lines A and B that are drawn on the chamfered curved surface of the glass substrate and a tangential line C that is drawn on the tip of the end surface of the glass substrate is set to the length (f).

To accomplish the above-described object, according to still another aspect of the invention, there is provided a glass substrate, wherein in a case where a predetermined area of an end surface is imaged with an imaging unit, and the imaged image is processed with white and black binarization to identify a recess that is present in the end surface and a flat portion that becomes a mirror surface of the end surface as a white image and a black image, respectively, a ratio of an area of the white image with respect to an area of the black image is 10% or less.

In the invention, it is preferable that the predetermined area be an arbitrary area having dimensions of width: 100 $\mu$m $\times$ height: 50 $\mu$m within a region that has dimensions of depth: 10 mm $\times$ width: 20 mm and includes a central portion of an end surface processing region of the glass substrate in a traveling direction of a grindstone.

In addition, according to the invention, there is provided the glass substrate according to the invention, wherein a size is 400 mm $\times$ 300 mm or more, a plate thickness (t) is 0.05 mm to 2.8 mm, and a trapezoidal shape, which is created by drawing three tangential lines on the end surface having a chamfered portion, satisfies the following dimensions.

$$1/3 \leq 1-2\tan\beta \times W/t \leq 4/5$$

(here, $\beta$ represents an angle of aperture (an angle made by a tangential line of a chamfered curved surface of the end surface of the glass substrate at an intersection point between a plate surface of the glass substrate and the chamfered curved surface of the end surface of the glass substrate, and the plate surface of the glass substrate, and a range thereof is 50°≤2$\beta$≤80°), and

W represents an end surface width (a length from the intersection point between the plate surface of the glass substrate and the chamfered curved surface of the end surface of the glass substrate to a tangential line drawn on a tip of the end surface of the glass substrate in a direction parallel with the plate surface of the glass substrate))

EFFECTS OF THE INVENTION

According to the method of evaluating an end surface of a glass substrate of the invention, the properties and state of the end surface of the glass substrate may be accurately evaluated. In addition, according to the method of processing an end surface of a glass substrate of the invention, a glass substrate in which a quality of the end surface is stabilized may be manufactured. Furthermore, according to the glass substrate of the invention, dust does not easily adhere to the end surface and defects such as burning defect, chipping, and cracking may be prevented from occurring on a chamfered surface.

BRIEF DESCRIPTION OF THE DRAWINGS

Fig. 1 is a diagram illustrating a method of evaluating an end surface of a glass substrate related to an embodiment and a method of processing the end surface of the glass substrate related to an embodiment.
Fig. 2 is a photographic image that is obtained by imaging the end surface of the glass substrate after being processed with chamfering grindstone with a laser microscope.
Fig. 3 is a photographic image in which a recess present in the end surface and a mirror surface on the end surface are expressed in a color-coded manner as a white image and a black image, respectively, by processing image data in Fig. 2 with white and black binarization.
Fig. 4 is a photographic image that is obtained by imaging the end surface of the glass substrate after being processed with chamfering grindstone with a laser microscope.
Fig. 5 is a photographic image in which a recess present in the end surface and a mirror surface on the end surface are expressed in a color-coded manner as a white image and a black image, respectively, by processing image data in Fig. 4 with white and black binarization.
Fig. 6 is a photographic image that is obtained by imaging the end surface of the glass substrate after being processed with chamfering grindstone with a laser microscope.
Fig. 7 is a photographic image in which a recess present in the end surface and a mirror surface on the end surface are expressed in a color-coded manner as a white image and a black image, respectively, by processing image data in Fig. 6 with white and black binarization.
Fig. 8 is a photographic image that is obtained by imaging the end surface of the glass substrate after being processed with an end surface rough grinding process with a laser microscope.
Fig. 9 is a photographic image in which a recess present in the end surface and a mirror surface on the end surface are expressed in a color-coded manner as a white image and a black image, respectively, by processing image data in Fig. 8 with white and black binarization.
Fig. 10 is a photographic image obtained by imaging the end surface of the glass substrate after being processed with chamfering grindstone with a laser microscope.
Fig. 11 is a photographic image in which a recess present in the end surface and a mirror surface on the end surface are expressed in a color-coded manner as a white image and a black image, respectively, by processing image data in Fig. 10 with white and black binarization.
Fig. 12 is a photographic image that is obtained by imaging the end surface of the glass substrate after being processed with chamfering grindstone with a laser microscope.
Fig. 13 is a photographic image in which a recess present in the end surface and a mirror surface on the end surface are expressed in a color-coded manner as a white image and a black image, respectively, by processing image data in Fig. 12 with white and black binarization.
Fig. 14A is an enlarged cross-sectional diagram of a glass substrate that is an FPD glass substrate related to this embodiment, in which a chamfered shape having a single curved surface is shown.
Fig. 14B is an enlarged cross-sectional diagram of a glass substrate that is an FPD glass substrate related to this embodiment, in which a chamfered shape having a flat portion and two curved surfaces with the same curvature is shown.
Fig. 15A is a diagram illustrating a trapezoidal shape corresponding to Fig. 14A.
Fig. 15B is a diagram illustrating a trapezoidal shape corresponding to Fig. 14B.
Fig. 16 is a diagram illustrating a trapezoidal shape in a first example of the glass substrate.
Fig. 17 is a diagram illustrating a trapezoidal shape in a second example of the glass substrate.
Fig. 18 is a diagram illustrating a trapezoidal shape in a third example of the glass substrate.

Fig. 19 is a diagram illustrating a trapezoidal shape in a fourth example of the glass substrate.

Fig. 20 is a diagram illustrating a trapezoidal shape in a fifth example of the glass substrate.

Fig. 21 is a diagram illustrating a trapezoidal shape in a sixth example of the glass substrate.

Fig. 22 is a diagram illustrating a trapezoidal shape in a seventh example of the glass substrate.

Fig. 23 is a diagram illustrating a trapezoidal shape in an eighth example of the glass substrate.

Fig. 24A is an enlarged cross-sectional diagram of a glass substrate, in which a chamfered shape having a single curved surface is shown.

Fig. 24B is an enlarged cross-sectional diagram of a glass substrate, in which a chamfered shape having a flat portion and two curved surfaces with the same curvature is shown.

MODES FOR CARRYING OUT THE INVENTION

Hereinafter, preferred embodiments of a method of evaluating an end surface of a glass substrate related to the invention, a method of processing the end surface of the glass substrate related to the invention, and a glass substrate related to the invention will be described in detail with reference to the attached drawings.

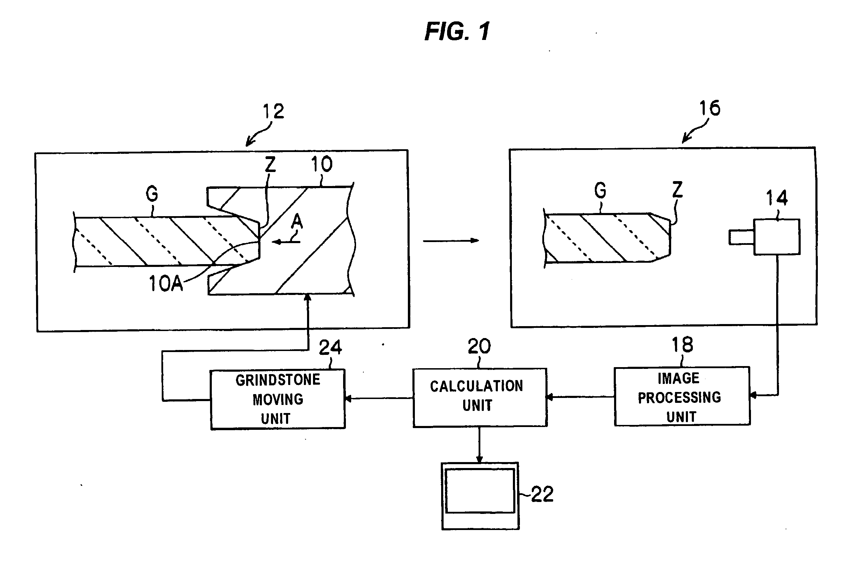

Fig. 1 shows a diagram illustrating a method of evaluating an end surface of a glass substrate related to the embodiment and a method of processing the end surface of the glass substrate related to the embodiment.

As shown in Fig. 1, a process of processing (chamfering) the end surface of the glass substrate G includes a processing process by a processing unit 12 provided with a chamfering grindstone (a grinding member) 10, and an inspection process by an inspection unit 16 provided with a laser microscope (VK-9500 manufactured by KYENCE CORPORATION) 14 that is an imaging unit.

In the processing unit 12, the end surface Z of the glass substrate G is pressed with a recess 10A of the chamfering grindstone 10 that rotates. Therefore, the end surface Z is chamfered. In addition, a rough grinding process, in which the end surface Z is rough ground, is provided in a previous stage of this processing process. Therefore, in the processing unit 12, the end surface Z is finish-ground into a mirror surface with the chamfering grindstone 10 that is a finish grindstone.

The chamfering grindstone 10 is an elastic resin bond grindstone in which diamond or ceramic is used as an abrasive grain, and the abrasive grain and the bond contribute to the mirror surface finish processing of the end surface Z. In addition, as a grit number, Nos. 220 to 1,000 are preferable, and Nos. 220 to 600 are more preferable. Furthermore, the peripheral speed of the chamfering grindstone 10 is 470 to 3, 000 m/min, the grinding load during processing is managed as an electric current value or an electric power value, and the peripheral speed is controlled so that the grinding load becomes constant. In addition, a coolant liquid is supplied between the chamfering grindstone 10 and the end surface Z of the glass substrate G to prevent the end surface Z from being burned.

The glass substrate G of which end surface Z is finish-ground with the processing unit 12 is moved for an inspection process, and a predetermined area of the end surface Z is imaged by a laser microscope 14 in the inspection unit 16.

The area of the end surface Z that is to be imaged by the laser microscope 14 may be, for example, an area of a processing initiation portion of the end surface Z of the glass substrate, an area of a central portion of a region to be processed, or an area of a processing termination portion. Specifically, the following area may be selected.

As the area of the processing initiation portion of the substrate, first, a sample, which has dimensions of depth: 10 mm × width: 20 mm and which includes an end surface located at a position of 100 mm from a grindstone contact initiation position in the traveling direction of the grindstone, is cut from the glass substrate, and then an arbitrary area having dimensions of width: 100 $\mu$m × height: 50 $\mu$m may be selected from an end surface of the sample. Preferably, an area having dimensions of width: 100 $\mu$m × height: 50 $\mu$m at the central portion of the end surface of the cut sample may be selected.

As the area of the processing central portion of the substrate, first, a sample, which has dimensions of depth: 10 mm × width: 20 mm and which includes the central portion of the end surface processing region of the glass substrate in the traveling direction of the grindstone, is cut from the glass substrate, and then an arbitrary area having dimensions of width: 100 $\mu$m × height: 50 $\mu$m may be selected from an end surface of the sample. Preferably, an area having dimensions of width: 100 $\mu$m × height: 50 $\mu$m at the central portion of the end surface of the cut sample may be selected.

As the area of the processing termination portion of the substrate, a sample, which has dimensions of depth: 10 mm × width: 20 mm and which includes an end surface located at a position of 100 mm from a grindstone contact termination position in a direction reverse to the traveling direction of the grindstone, is cut from the glass substrate, and then an arbitrary area having dimensions of width: 100 $\mu$m × height: 50 $\mu$m may be selected from an end surface of the sample. Preferably, an area having dimensions of width: 100 $\mu$m × height: 50 $\mu$m at the central portion of the end surface of the cut sample may be selected.

The laser microscope 14 is a digital microscope that uses laser light as a light source. Laser microscope 14 can detect an accurate focal position of the end surface Z of the glass substrate G, and thus in scanning in the height direction, an image with good contrast may be observed in a focused state. In addition, the laser microscope 14 may also measure surface roughness and surface shape and output of digital data of an enlarged image, in addition brightness information of the end surface Z of the glass substrate G, width of irregularity of the end surface Z of the glass substrate G, height of the irregularity of the end surface Z of the glass substrate G, or the like. That is, the irregularity state of the surface may be shown.

High-resolution image data of the end surface Z that is imaged by the laser microscope 14 is output to an image processing unit 18. In the image processing unit 18, the image data is subjected to white and black binarization processing, a recess present in the end surface Z and a flat portion that becomes a mirror surface of the end surface Z are identified as a white image and a black image, respectively, and image data expressing the white image and the black image is output to a calculation unit 20.

The white and black binarization processing is performed with the following method. An image obtained by imaging the end surface of the roughly ground glass substrate G with the laser microscope 14 is prepared. In this case, brightness becomes approximately constant. In the image that is obtained, an image of the end surface is expressed with 255 gray scales.

The rough grinding is performed with a metal bond grindstone of a grit number of Nos. 450 to 600. The peripheral speed of the metal bond grindstone is set to 470 to 3,000 m/minute, and the grinding load during processing is managed as a current value or a power value, and the peripheral speed is controlled so that the grinding load becomes constant. In addition, a coolant liquid is supplied between the metal bond grindstone and the end surface Z of the glass substrate G, and thus there is an effect of preventing the end surface Z from being burned.

Next, a difference in a gray scale between adjacent pixels of the obtained image is calculated, a frequency distribution of the difference value is obtained, and a standard deviation $\sigma$ thereof is calculated. This standard deviation $\sigma$ is set to a reference threshold value of the white and black binarization processing. That is, an image of the threshold value (standard deviation $\sigma$) or more is set to a white image, and an image of less than the threshold value (standard deviation $\sigma$) is set to a black image.

Next, the same processing is also performed with respect to the end surface that is subjected to the finish processing after the rough grinding, and the binarization processing is performed using the threshold value (standard deviation $\sigma$) obtained in the rough processing, and an area ratio between a white area and a black area is compared. According to this, detailed checking whether or not the finishing is satisfactory may be realized.

In calculation unit 20, the ratio of an area that is occupied by the white image with respect to an area that is occupied by the black image is calculated, and the ratio is displayed on a monitor 22. An operator checks this ratio, and on the basis of this ratio, the operator evaluates the properties and state of the end surface Z of the glass substrate G. In addition, the image of the end surface Z that is imaged by the laser microscope 14 and the image of the end surface Z that is subjected to the white and black binarization processing are also displayed on the monitor 22.

That is, according to the evaluation method of this embodiment, the image of the end surface Z that is imaged by the laser microscope 14 is subjected to the white and black binarization processing, the recess that is present in the end surface and the flat portion that becomes the mirror surface of the end surface are identified as the white image and the black image, respectively, and the properties and state of the end surface of the glass substrate is evaluated on the basis of the ratio of the area of the white image with respect to the area of the black image.

According to this evaluation method, compared to an evaluation method using a probe-type roughness meter in which reliability of a degree of precision greatly depends on the size of the recess that is present in the end surface Z, the properties and state of the end surface Z of the glass substrate G may be evaluated in a relatively accurate manner.

In addition, in the calculation unit 20, in a case where the threshold value of the ratio is set to 10% and the ratio exceeds 10%, a grindstone moving unit 24 is optimally controlled, so as to increase a grinding volume of the end surface Z with the chamfering grindstone 10.

The present inventors made a thorough investigation on the ratio to suppress the adhesion of dust to the end surface Z. As a result thereof, they found that when the ratio exceeds 10%, the dust easily adheres, and when the ratio is 10% or less, the dust does not easily adhere. Therefore, the threshold value of the ratio is set to 10% whenever the end surface Z of the glass substrate G is evaluated.

In addition, with the end surface processing method of this embodiment, the grinding volume of the end surface Z with the chamfering grindstone 10 is optimally controlled on the basis of the ratio calculated by the calculation unit 20 as described above. That is, in a case where the calculated ratio is larger than 10% that is the threshold value, judging that the grinding volume with the chamfering grindstone 10 is small and a lot of recesses are present in the end surface Z, and thus the grindstone moving unit 24 is controlled so that a finish quality becomes optimal. Specifically, the above-described ratio is controlled with moving the chamfering grindstone 10 with respect to the end surface Z in a direction of an arrow A in Fig. 1 so as to increase the grinding volume. According to this, the quality of the end surface Z of the glass substrate G is stabilized. In addition, dust does not easily adhere to the processed end surface Z of the glass substrate G, and thus the glass substrate G has a good quality. In addition, the glass substrate G in which the above-described ratio exceeds 10% is returned to the processing unit 12 from the inspection unit 16, and is processed again with the chamfering grindstone 10.

[Example 1]

The end surface Z of the glass substrate G having dimensions of 1,000 mm × 1,000 mm was roughly ground with a metal bond grindstone of a grit number of Nos. 450 to 600 while controlling a peripheral speed of 470 to 3, 000 m/minute so that the grinding load becomes constant. Subsequently, the end surface Z was finish-ground into a mirror surface with an elastic resin bond grindstone of a grit number of No. 600 as a finish grindstone while controlling the peripheral speed within a range of 470 to 3,000 m/minute so that the grinding load becomes constant.

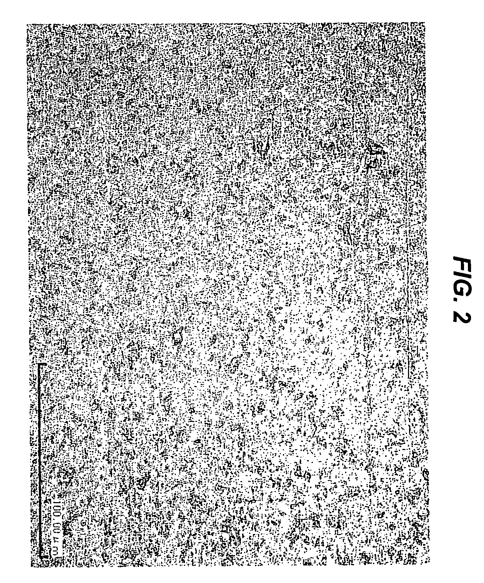

The photographic image shown in Fig. 2 represents the glass substrate G after process with the chamfering grindstone 10, and is a photographic image obtained by imaging the area of the processing central portion of the end surface Z of the glass substrate G with the laser microscope 14.

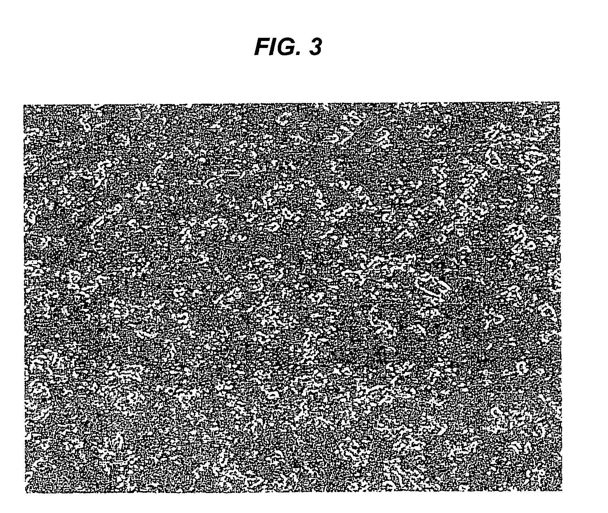

Fig. 3 shows a photographic image in which the recess present in the end surface Z and the flat portion that becomes a mirror surface of the end surface are expressed in a color-coded manner as a white image and a black image, respectively, by processing the image data in Fig. 2 with white and black binarization, and the ratio thereof was calculated as 9.05% by the calculation unit 20.

That is, in the end surface Z shown in Figs. 2 and 3, since the ratio is 10% or less, it can be said that the mirror surface finish processing with the chamfering grindstone 10 was satisfactory, and thus dust does not easily adhere to the end surface Z. In addition, the roughness of the end surface Z was measured by a probe-type surface roughness shape measuring machine (product name: SURFCOM, manufactured by TOKYO SEIMITSU CO., LTD.; a cut off value: 0.25 mm; and measurement length: 10 mm), and as a result thereof, Ra was 0.11 μm.

[Example 2]

The end surface Z of the glass substrate G having dimensions of 1,000 mm × 1,000 mm was roughly ground with a metal bond grindstone of a grit number of Nos. 450 to 600 while controlling a peripheral speed of 470 to 3,000 m/minute so that the grinding load becomes constant. Subsequently, the end surface Z was finish-ground into a mirror surface with an elastic resin bond grindstone of a grit number of No. 220 as a finish grindstone while controlling the peripheral speed within a range of 470 to 3,000 m/minute so that the grinding load becomes constant.

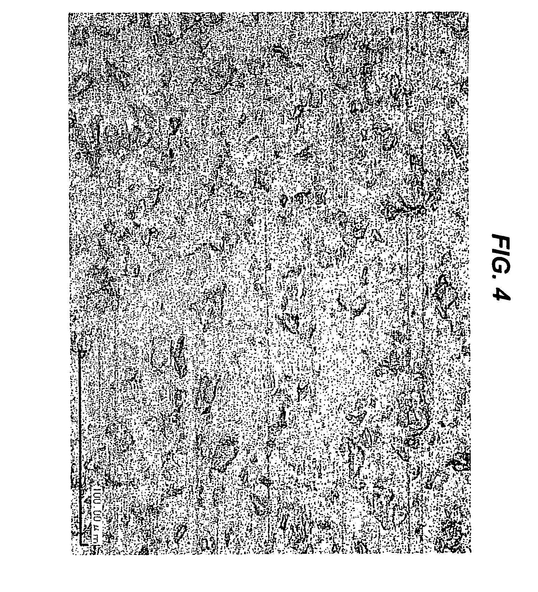

The photographic image shown in Fig. 4 represents the glass substrate G after process with the chamfering grindstone 10, and the photographic image is a photographic image that may be obtained by imaging the area of the processing central portion of the end surface Z of the glass substrate G with the laser microscope 14.

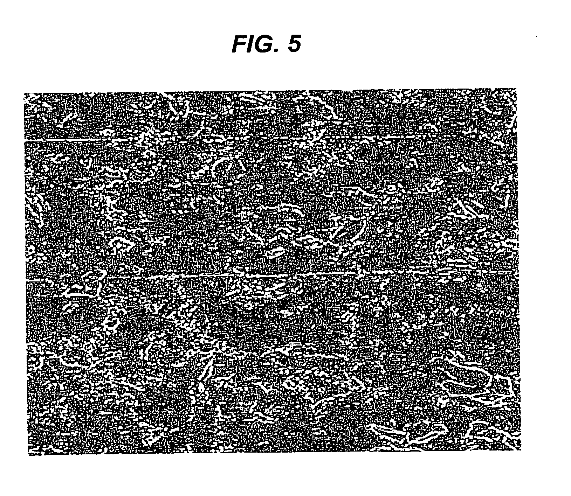

Fig. 5 shows a photographic image in which the recess present in the end surface Z and the flat portion that becomes a mirror surface of the end surface are expressed in a color-coded manner as a white image and a black image, respectively, by processing the image data in Fig. 4 with white and black binarization, and the ratio thereof was calculated as 8.13% by the calculation unit 20.

That is, in the end surface Z shown in Figs. 4 and 5, since the ratio is 10% or less, it can be said that the mirror surface finish processing with the chamfering grindstone 10 was satisfactory, and thus dust does not easily adhere to the end surface Z. In addition, the roughness of the end surface Z was measured by a probe-type surface roughness shape measuring machine (product name: SURFCOM, manufactured by TOKYO SEIMITSU CO., LTD.; a cut off value: 0.25 mm; and measurement length: 10 mm), and as a result thereof, Ra was 0.22 μm.

[Example 3]

The end surface Z of the glass substrate G having dimensions of 1,000 mm × 1,000 mm was roughly ground with a metal bond grindstone of a grit number of Nos. 450 to 600 while controlling a peripheral speed of 470 to 3, 000 m/minute so that the grinding load becomes constant. Subsequently, the end surface Z was finish-ground into a mirror surface with an elastic resin bond grindstone of a grit number of No. 320 as a finish grindstone while controlling the peripheral speed within a range of 470 to 3,000 m/minute so that the grinding load becomes constant.

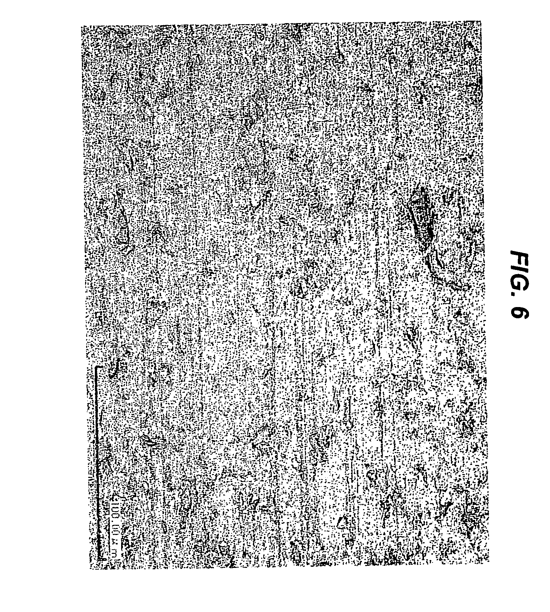

The photographic image shown in Fig. 6 represents the glass substrate G after process with the chamfering grindstone 10, and the photographic image is a photographic image that may be obtained by imaging the area of the processing central portion of the end surface Z of the glass substrate G with the laser microscope 14.

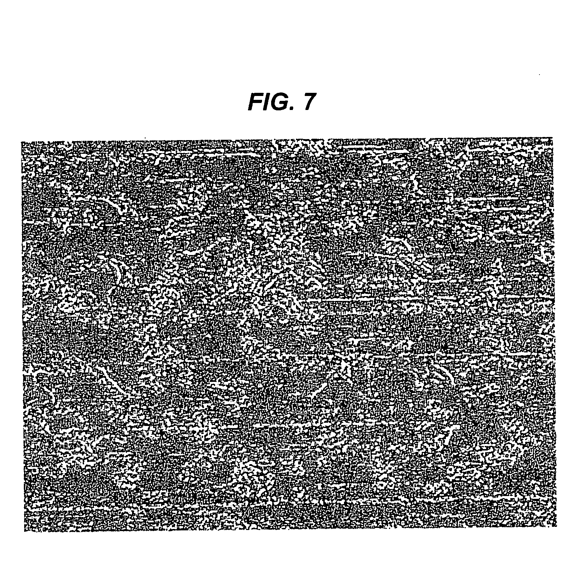

Fig. 7 shows a photographic image in which the recess present in the end surface Z and the flat portion that becomes a mirror surface of the end surface are expressed in a color-coded manner as a white image and a black image, respectively, by processing the image data in Fig. 6 with white and black binarization, and the ratio thereof was calculated as 9.82% by the calculation unit 20.

That is, in the end surface Z shown in Figs. 6 and 7, since the ratio is 10% or less, it can be said that the mirror surface finish processing with the chamfering grindstone 10 was satisfactory, and thus dust does not easily adhere to the end surface Z. In addition, the roughness of the end surface Z was measured by a probe-type surface roughness shape measuring machine (product name: SURFCOM, manufactured by TOKYO SEIMITSU CO., LTD.; a cut off value: 0.25 mm; and measurement length: 10 mm), and as a result thereof, Ra was 0.23 μm.

[Comparative Example 1]

The end surface Z of the glass substrate G having dimensions of 1,000 mm × 1,000 mm was roughly ground with a metal bond grindstone of a grit number of Nos. 450 to 600 while controlling a peripheral speed of 470 to 3, 000 m/minute so that the grinding load becomes constant.

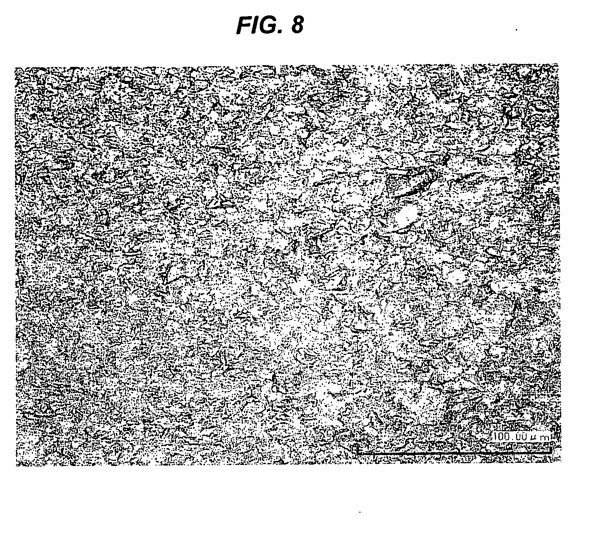

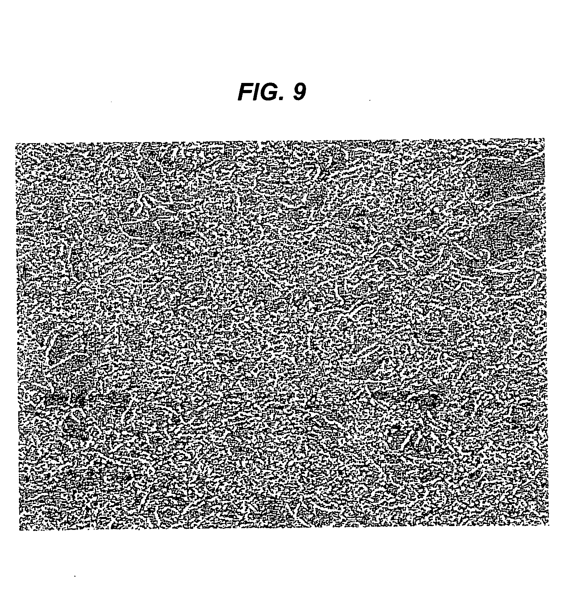

A photographic image shown in Fig. 8 represents the glass substrate G after an end surface rough grinding process and before processing with the chamfering finish grindstone 10, and the photographic image is a photographic image that may be obtained by imaging the area of the processing central portion of the roughly ground end surface Z of the glass substrate G with the laser microscope 14. Fig. 9 shows a photographic image in which the recess present in the end surface Z and the mirror surface on the end surface are expressed in a color-coded manner as a white image and a black image, respectively, by processing the image data in Fig. 8 with white and black binarization, and the ratio thereof was calculated as 22.67% by the calculation unit 20.

That is, Figs. 8 and 9 show the properties and state of the end surface Z of the glass substrate G before the processing with the chamfering grindstone 10. In addition, the roughness of the end surface Z was measured by a probe-type surface roughness shape measuring machine (product name: SURFCOM, manufactured by TOKYO SEIMITSU CO. , LTD. ; a cut off value: 0.25 mm; and measurement length: 10 mm), and as a result thereof, Ra was 0.45 μm.

[Comparative Example 2]

The end surface Z of the glass substrate G having dimensions of 1,000 mm × 1,000 mm was roughly ground with a metal bond grindstone of a grit number of Nos. 450 to 600 while controlling a peripheral speed of 470 to 3, 000 m/minute so that the grinding load becomes constant. Subsequently, the end surface Z was finish-ground into a mirror surface with resin bond grindstone of a grit number of Nos. 220 to 800 as a finish grindstone while controlling the peripheral speed within a range of 470 to 3, 000 m/minute so that the grinding load becomes constant.

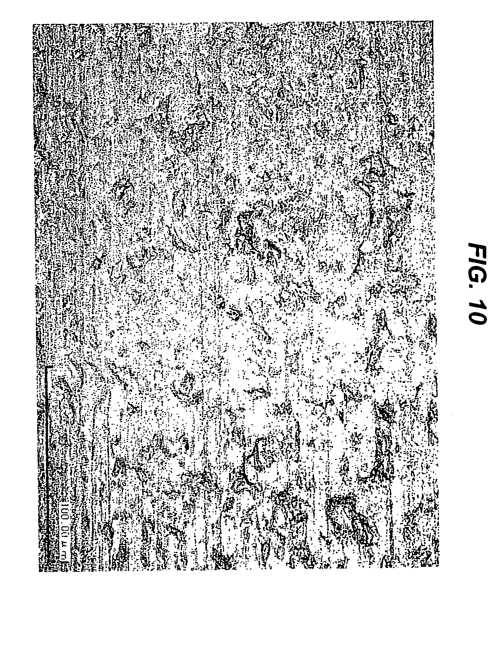

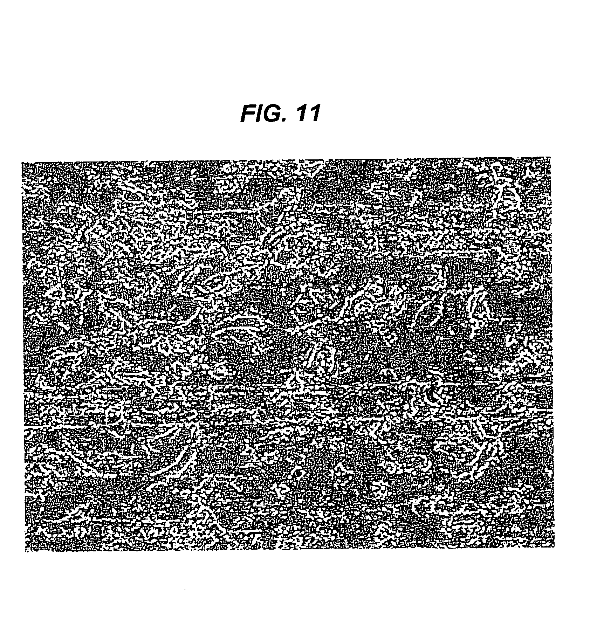

The photographic image shown in Fig. 10 represents the glass substrate G after process with the chamfering grindstone 10, and the photographic image is a photographic image that may be obtained by imaging the area of the processing central portion of the end surface Z of the glass substrate G with the laser microscope 14. Fig. 11 shows a photographic image in which the recess present in the end surface Z and the mirror surface on the end surface are expressed in a color-coded manner as a white image and a black image, respectively, by processing the image data in Fig. 10 with white and black binarization, and the ratio thereof was calculated as 13.10% by the calculation unit 20.

That is, since in the end surface Z shown in Figs. 10 and 11, the ratio exceeds 10%, and dust easily adheres to the end surface Z, it is necessary to again perform the mirror surface finish processing with the chamfering grindstone 10. In addition, the roughness of the end surface Z was measured by a probe-type surface roughness shape measuring machine (product name: SURFCOM, manufactured by TOKYO SEIMITSU CO., LTD. ; a cut off value: 0.25 mm; and measurement length: 10 mm), and as a result thereof, Ra was 0.32 μm.

[Comparative Example 3]

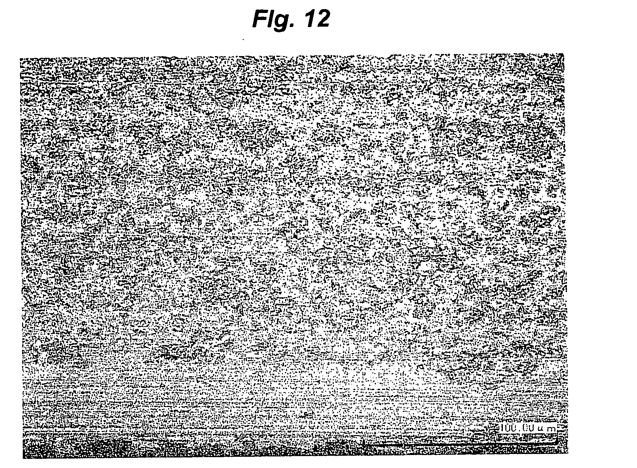

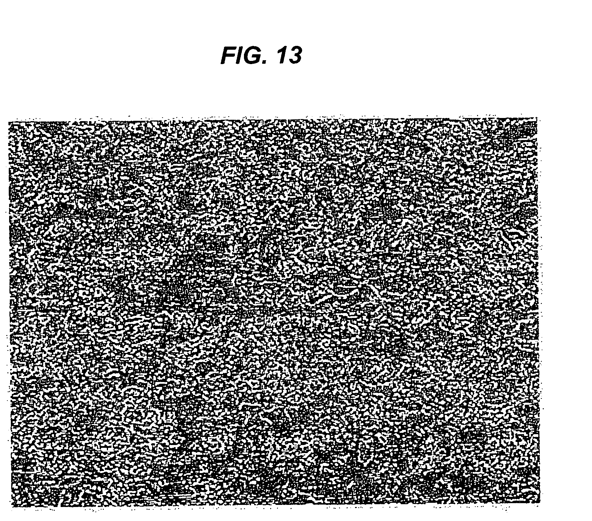

The photographic image shown in Fig. 12 represents the glass substrate G after process with the chamfering grindstone 10, and the photographic image is a photographic image that may be obtained by imaging the area of the processing central portion of the end surface Z of the glass substrate G with the laser microscope 14. Fig. 13 shows a photographic image in which the recess present in the end surface Z and the mirror surface on the end surface are expressed in a color-coded manner as a white image and a black image, respectively, by processing the image data in Fig. 12 with white and black binarization, and the ratio thereof was calculated as 16.73% by the calculation unit 20.

That is, since in the end surface Z shown in Figs. 12 and 13, the ratio exceeds 10%, and dust easily adheres to the end surface Z, it is necessary to again perform the mirror surface finish processing with the chamfering grindstone 10. In addition, the roughness of the end surface Z was measured by a probe-type surface roughness shape measuring machine (product name: SURFCOM, manufactured by TOKYO SEIMITSU CO., LTD. ; a cut off value: 0.25 mm; and measurement length: 10 mm), and as a result thereof, Ra was 0.14 μm.

The ratio in Examples 2 and 3 is smaller than that of Comparative Example 3, but Ra in Examples 2 and 3 are larger than that of Comparative Example 3. The reason for this is considered to be as follows.

The measurement of Ra is performed by measuring the end surface of the glass substrate with the probe-type surface roughness meter. Therefore, in a case the recess present in the end surface of the glass substrate is minute, the tip of the probe may pass over a minute recess that is present in the end surface of the glass substrate without entering the recess, and thus the properties and state of the end surface of the glass substrate are not accurately evaluated.
On the other hand, in the ratio between the white image and the black image, since the properties and state of the end surface of the glass substrate are evaluated on the basis of the imaged image, the minute recess that is present in the end surface of the glass substrate may also be measured, and thus the properties and state of the end surface of the glass substrate may be accurately evaluated.
That is considered the reason why the magnitude of the ratio and the magnitude of Ra are reversed in the Examples 2 and 3 and Comparative Example 3.

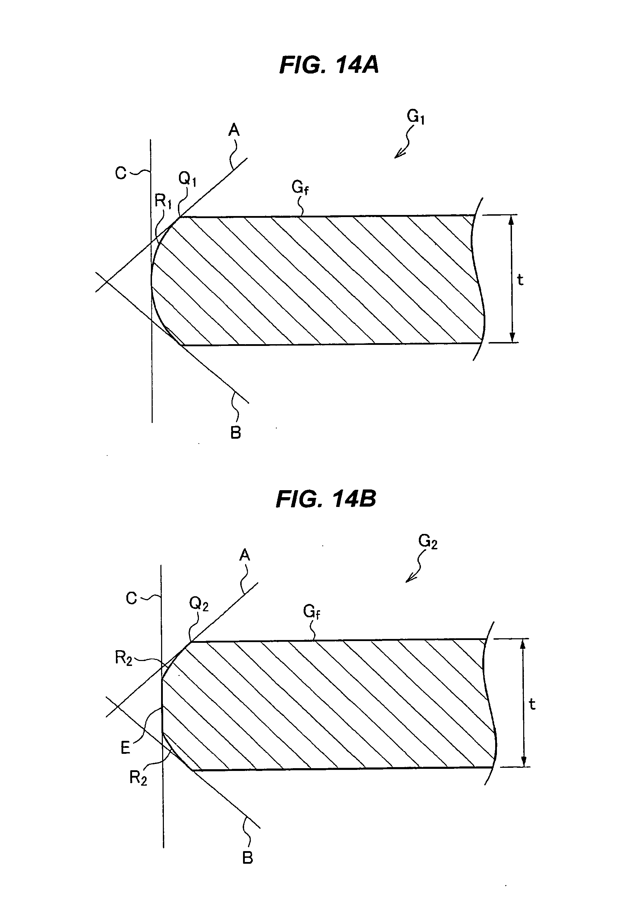

Figs. 14A and 14B show enlarged cross-sectional diagrams illustrating end surfaces of glass substrates $G_1$ and $G_2$ and the vicinity thereof so as to explain the FPD glass substrate of the embodiment. In addition, Fig. 14A illustrates the glass substrate $G_1$ having a chamfered shape having a single curved surface $R_1$, and Fig. 14B illustrates the glass substrate $G_2$ having a chamfered shape having a flat portion E and two curved surface $R_2$ and $R_2$ with the same curvature. In addition, the ratio of the end surface of the following glass substrate G is 10% or less.

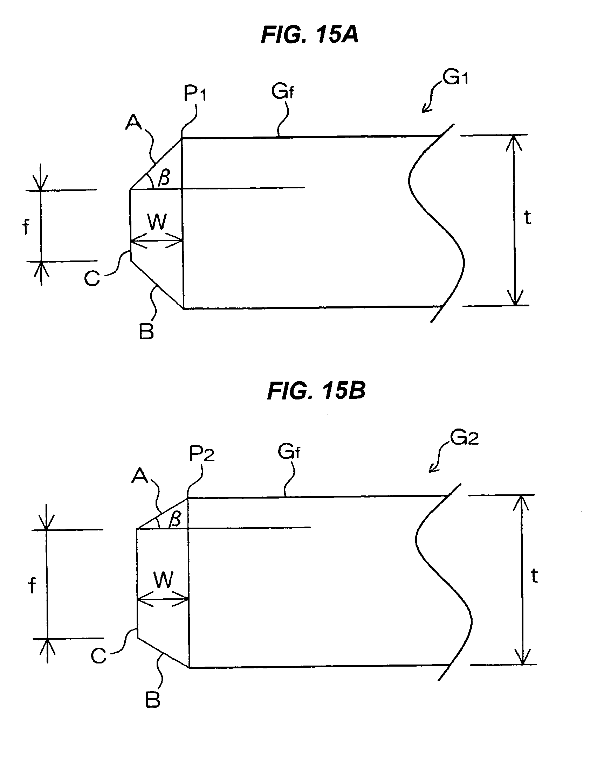

The size of the glass substrates $G_1$ and $G_2$ of the embodiment is 400 mm $\times$ 300 mm or more, and the plate thickness (t) thereof has a size of 0.05 mm$\leq$t$\leq$2.8 mm. In addition, trapezoidal shapes shown in Figs. 15A and 15B, which are created by drawing three tangential lines A, B, and C on the end surface having a chamfered portion, satisfy dimensions of the following Expression (1). In addition, Fig. 14A corresponds to Fig. 15A, and Fig. 14B corresponds to Fig. 15B. In Figs. 14A and 14B, the tangential lines A and B are tangential lines of the curved surface $R_1$ and the curved surface $R_2$ at intersection points between a plate surface $G_f$ that is a flat surface and the curved surfaces $R_1$ and $R_2$.

$$1/3 \leq 1-2\tan\beta \times W/t \leq 4/5 \ \cdots \ (1)$$

Here, ($\beta$) represents an angle of aperture. That is, ($\beta$) represents an angle made by the plate surface $G_f$ of the glass substrate $G_1$ or $G_2$ and the tangential line A or B that is drawn on the chamfered curved surface (curved surface $R_1$ or $R_2$) of the end surface of the glass substrate $G_1$ or $G_2$, and a range thereof is 50°$\leq$2$\beta$$\leq$80°.

In addition, (W) represents an end surface width of the glass substrate $G_1$ or $G_2$. That is, (W) represents the length from a point $P_1$ or $P_2$ at which the plate surface $G_f$ of the glass substrate $G_1$ or $G_2$ and the tangential line A or B intersect each other to the tangential line C that is drawn on the tip of the end surface of the glass substrate $G_1$ or $G_2$ in a direction parallel with the plate surface $G_f$.

The present inventors made a thorough investigation into a solution with respect to the above-described problem in the related art. As a result thereof, they obtained the following finding. That is, they created a trapezoidal shape by drawing three tangential lines A, B, and C on the end surface of the glass substrate $G_1$ or $G_2$ having a chamfered portion, and found parameters to create an optimal shape, which solves the above-described problem, with respect to the trapezoidal shape.

The parameters include the plate thickness (t) of the glass substrate $G_1$ or $G_2$, the angle of aperture ($\beta$) of the glass substrate $G_1$ or $G_2$, and the end surface width (W) of the glass substrate $G_1$ or $G_2$. In addition, the plate thickness (t) was defined to 0.05 mm $\leq$t$\leq$ 2.8 mm that is a commonly used range as a glass substrate for FPD. In addition, the angle of aperture ($\beta$) was defined to 50°$\leq$2$\beta$$\leq$80°, and it was assumed that the shape of the end surface shape at this time satisfies Expression (1) of "1/3$\leq$1-2tan$\beta$$\times$W/t$\leq$4/5".

The angle of aperture ($\beta$) is an important factor that has an effect on the quality of the glass substrates $G_1$ and $G_2$. When describing technical meaning of the range of the angle of aperture ($\beta$), in a case where 2$\beta$ is less than 50°, it was confirmed, through an examination, that the cooling liquid (coolant liquid) did not easily enter between the end surface of the glass substrate and the chamfering grindstone during chamfering processing of the end surface of the glass substrate, and thus burning defect occurred on the end surface of the glass substrate during the chamfering processing. In a case where the burning defect occurs, the strength of the end surface significantly decreases. Therefore, there occurs a problem in that cracking from the end surface as a crack source may easily occur in the glass substrate.

In addition, the problem of the patent reference 3 is to prevent flaw, cracking, and the like from occurring when a corner portion of an outer circumferential end surface of a substrate main body comes into contact with a cassette, and thus the shape of the outer circumferential end surface of the substrate main body is defined so as to solve the problem. Conversely, an object of the invention is also to prevent burning defect and chipping that occurs during chamfering processing of the glass substrate. Therefore, even though the shape is similar, the focus of the problem is completely different in each case. In addition, the burning defect phenomenon does not easily occur during chamfering processing of a small-sized hard disk substrate, and thus the burning defect problem is a problem unique to a large-sized FPD glass substrate, and the invention may solve the problem.

On the other hand, when 2$\beta$ exceeds 80°, it was confirmed, through an experiment, that chipping occurred at intersection point $Q_1$ or $Q_2$ between the plate surface $G_f$ that is a flat surface and the chamfered portion during the chamfering processing. When the chipping occurs, it is necessary to again process the end surface, and thus it takes time for the processing.

This is the reason why the range of the angle of aperture ($\beta$) was defined to $50° \leq 2\beta \leq 80°$ in the invention.

However, in a case where the length of a line segment connecting two intersection points between the tangential lines A and B, and the tangential line C is set to (f) (hereinafter, referred to as a "flat length"), $1\text{-}2\tan\beta \times W/t$ of Expression (1) may be converted to "f/t". That is, expression (1) may be expressed by "$1/3 \leq f/t \leq 4/5$".

In addition, in the invention, it is assumed that the size of the glass substrates $G_1$ and $G_2$ is 400 mm × 300 mm or more, and the plate thickness (t) is within a range of 0.05 mm $\leq t \leq 2.8$ mm, and the angle of aperture ($\beta$) is within a range of $50° \leq 2\beta \leq 80°$. In the glass substrates $G_1$ and $G_2$, though experiments, it was confirmed that when "f/t" is less than 1/3, the tip of the end surface is easily cracked. This is because rigidity of the end surface decreases. In addition, though experiments, it was confirmed that when "f/t" exceeds 4/5, an edge portion of the tip of the end surface is easily cracked. In addition, though experiments, it was confirmed that in a glass substrate having the size of 1,200 mm × 1,100 mm, the cracking problem may be solved in an effective manner.

Therefore, according to the invention, in regard to the glass substrates in which the conditions of the size, the plate thickness (t), and the angle of aperture ($\beta$), the glass substrates $G_1$ and $G_2$ satisfying "$1/3 \leq f/t \leq 4/5$" may prevent defects such as burning defect, chipping, and cracking occurring on the chamfered surface.

Hereinafter, examples will be described.

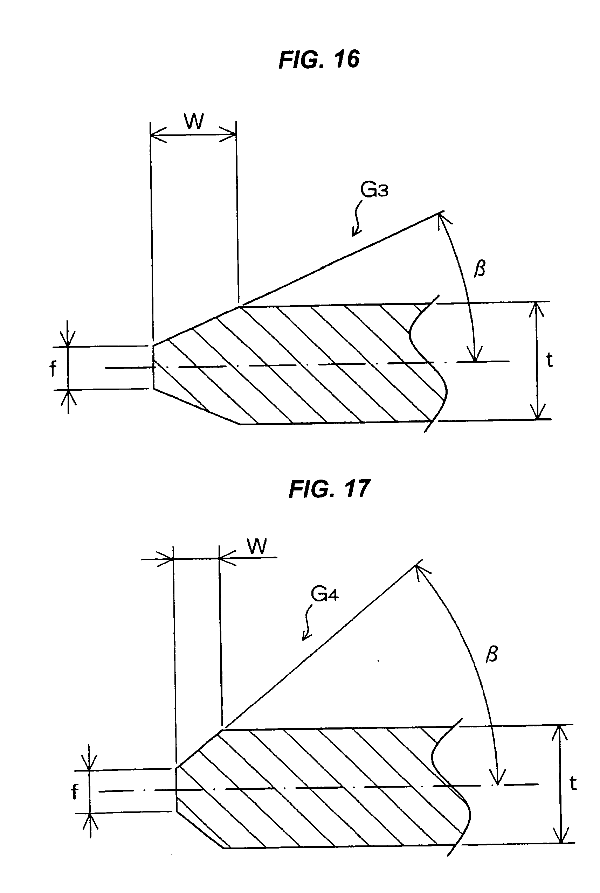

The glass substrate $G_3$ shown in Fig. 16 is a glass substrate which satisfies the above-described size, and in which the plate thickness (t) is 0.05 mm, the angle of aperture ($\beta$) is 25° ($2\beta=50°$), the end surface width (W) is 0.0354 mm, the flat length (f) is 0.017 mm, and f/t is larger than 1/3.

This glass substrate $G_3$ is a glass substrate satisfying the conditions of the invention, and in this glass substrate $G_3$, defects such as burning defect, chipping, and cracking were also not found on a chamfered surface.

The glass substrate $G_4$ shown in Fig. 17 is a glass substrate which satisfies the above-described size, and in which the plate thickness (t) is 0.05 mm, the angle of aperture ($\beta$) is 40° ($2\beta=80°$), the end surface width (W) is 0.0197 mm, the flat length (f) is 0.017 mm, and f/t is larger than 1/3.

This glass substrate $G_4$ is also a glass substrate satisfying the conditions of the invention, and in this glass substrate $G_4$, defects such as burning defect, chipping, and cracking were also not found on a chamfered surface.

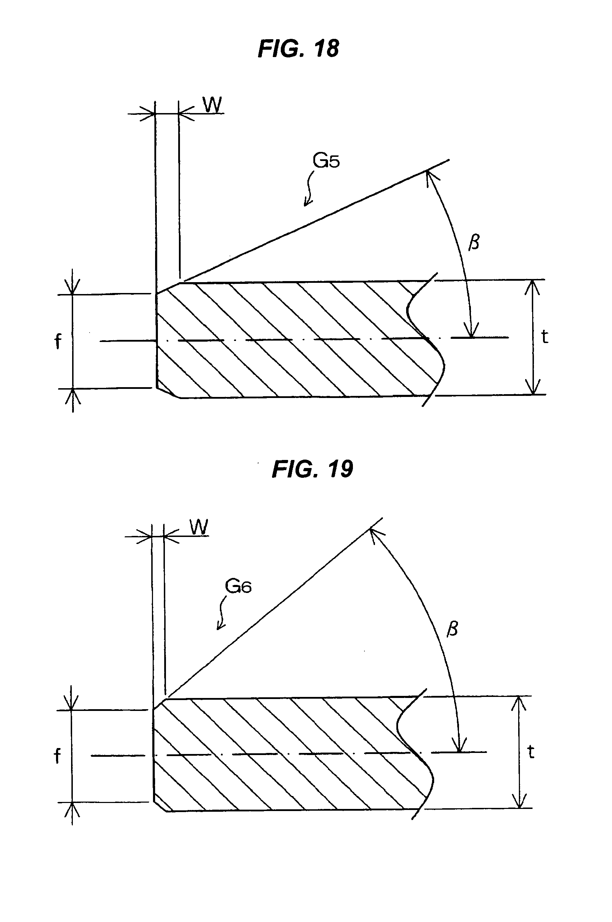

The glass substrate $G_5$ shown in Fig. 18 is a glass substrate which satisfies the above-described size, and in which the plate thickness (t) is 0.05 mm, the angle of aperture ($\beta$) is 25° ($2\beta=50°$), the end surface width (W) is 0.0107 mm, the flat length (f) is 0.040 mm, and f/t is 4/5.

This glass substrate $G_5$ is also a glass substrate satisfying the conditions of the invention, and in this glass substrate $G_5$, defects such as burning defect, chipping, and cracking were also not found on a chamfered surface.

The glass substrate $G_6$ shown in Fig. 19 is a glass substrate which satisfies the above-described size, and in which the plate thickness (t) is 0.05 mm, the angle of aperture ($\beta$) is 40° ($2\beta=80°$), the end surface width (W) is 0.006 mm, the flat length (f) is 0.040 mm, and f/t is 4/5.

This glass substrate $G_6$ is also a glass substrate satisfying the conditions of the invention, and in this glass substrate $G_6$, defects such as burning defect, chipping, and cracking were also not found on a chamfered surface.

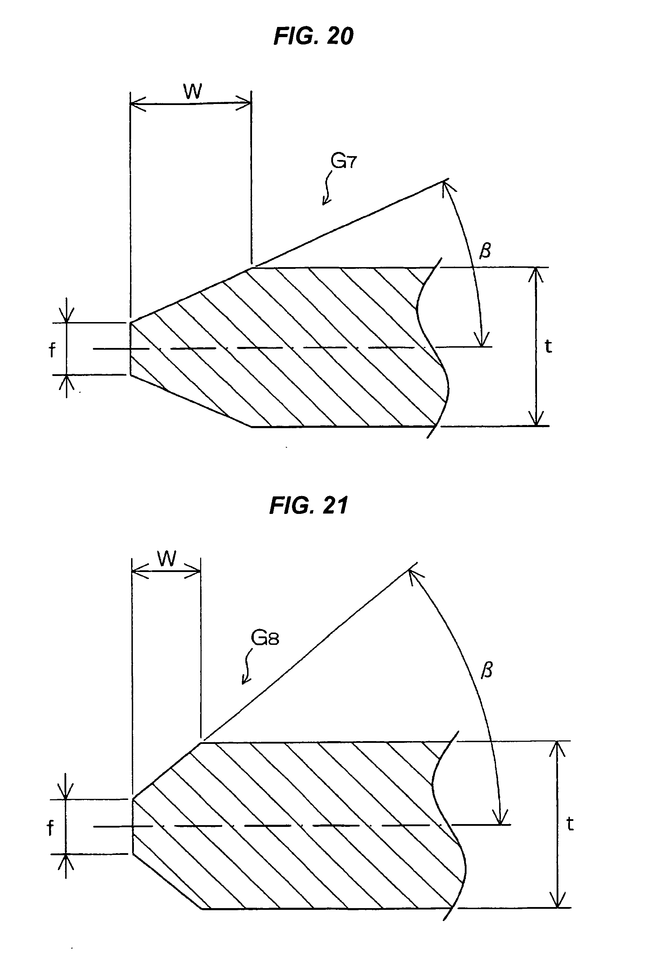

The glass substrate $G_7$ shown in Fig. 20 is a glass substrate which satisfies the above-described size, and in which the plate thickness (t) is 2.8 mm, the angle of aperture ($\beta$) is 25° ($2\beta=50°$), the end surface width (W) is 2.002 mm, the flat length (f) is 0.933 mm, and f/t is larger than 1/3.

This glass substrate $G_7$ is also a glass substrate satisfying the conditions of the invention, and in this glass substrate $G_7$, defects such as burning defect, chipping, and cracking were also not found on a chamfered surface.

The glass substrate $G_8$ shown in Fig. 21 is a glass substrate which satisfies the above-described size, and in which the plate thickness (t) is 2.8 mm, the angle of aperture ($\beta$) is 40° ($2\beta=80°$), the end surface width (W) is 1.113 mm, the flat length (f) is 0.933 mm, and f/t is larger than 1/3.

This glass substrate $G_8$ is also a glass substrate satisfying the conditions of the invention, and in this glass substrate $G_8$, defects such as burning defect, chipping, and cracking were also not found on a chamfered surface.

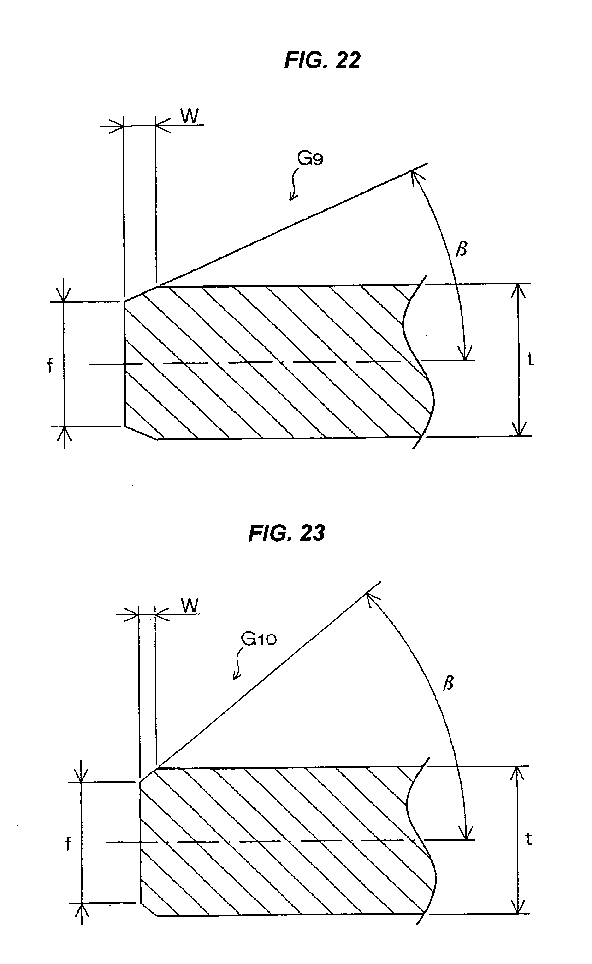

The glass substrate $G_9$ shown in Fig. 22 is a glass substrate which satisfies the above-described size, and in which the plate thickness (t) is 2.8 mm, the angle of aperture ($\beta$) is 25° ($2\beta=50°$), the end surface width (W) is 0.600 mm, the flat length (f) is 2.240 mm, and f/t is 4/5.

This glass substrate $G_9$ is also a glass substrate satisfying the conditions of the invention, and in this glass substrate $G_9$, defects such as burning defect, chipping, and cracking were also not found on a chamfered surface.

The glass substrate $G_{10}$ shown in Fig. 23 is a glass substrate which satisfies the above-described size, and in which the plate thickness (t) is 2.8 mm, the angle of aperture ($\beta$) is 40° ($2\beta=80°$), the end surface width (W) is 0.334 mm, the flat length (f) is 2.240 mm, and f/t is 4/5.

This glass substrate $G_{10}$ is also a glass substrate satisfying the conditions of the invention, and in this glass substrate $G_{10}$, defects such as burning defect, chipping, and cracking were also not found on a chamfered surface.

The present application was described with reference to a specific embodiment, but it will be obvious to those skilled in the art that various modifications and changes may be made without departing from the spirit and scope of the invention. The present application is based on Japanese patent application No. 2010-155987 filed on July 8, 2010, the content of which is incorporated herein by reference.

DESCRIPTION OF REFERENCE NUMERALS

10: Chamfering grindstone
12: Processing unit
14: Laser microscope
16: Inspection unit
18: Image processing unit
20: Calculation unit
22: Monitor
24: Grindstone moving unit
Z: End surface
$G_1$ to $G_{10}$: Glass substrate for FPD
$G_f$: Plate surface
A, B, and C: Tangential line

**Claims**

1. A method of evaluating an end surface of a glass substrate, the method comprising:

   imaging a predetermined area of the end surface of the glass substrate with an imaging unit;
   processing the imaged image with white and black binarization to identify a recess that is present in the end surface and a flat portion that becomes a mirror surface of the end surface as a white image and a black image, respectively; and
   evaluating properties and a state of the end surface of the glass substrate on the basis of a ratio of an area of the white image with respect to an area of the black image.

2. The method of evaluating an end surface of a glass substrate according to Claim 1, wherein
   a threshold value of the ratio of the area of the white image with respect to the area of the black image is set to 10%.

3. A method of processing an end surface of a glass substrate, the method comprising:

   grinding the end surface of the glass substrate with a grinding member;
   imaging the ground end surface with an imaging unit;
   processing the imaged image with white and black binarization to identify a recess that is present in the end surface and a flat portion that becomes a mirror surface of the end surface as a white image and a black image, respectively; and
   controlling a grinding volume of the end surface with the grinding member so that a ratio of an area of the white image with respect to an area of the black image becomes a predetermined threshold value or less.

4. The method of processing an end surface of a glass substrate according to Claim 3, wherein
   the control is performed so that the threshold value of the ratio of the area of the white image with respect to the area of the black image becomes 10% or less.

5. A glass substrate that is processed with the method of processing an end surface of a glass substrate according to Claim 4.

6. A glass substrate that is processed with the method of processing an end surface of a glass substrate according to Claim 4, wherein:

   a size is 400 mm $\times$ 300 mm or more;
   a plate thickness (t) is 0.05 mm to 2.8 mm; and

a trapezoidal shape, which is created by drawing three tangential lines on the end surface having a chamfered portion, satisfies the following dimensions.

$$1/3 \leq 1-2\tan\beta \times W/t \leq 4/5$$

(here, $\beta$ represents an angle of aperture (an angle made by a tangential line of a chamfered curved surface of the end surface of the glass substrate at an intersection point between a plate surface of the glass substrate and the chamfered curved surface of the end surface of the glass substrate, and the plate surface of the glass substrate, and a range thereof is $50° \leq 2\beta \leq 80°$), and

W represents an end surface width (a length from the intersection point between the plate surface of the glass substrate and the chamfered curved surface of the end surface of the glass substrate to a tangential line drawn on a tip of the end surface of the glass substrate in a direction parallel with the plate surface of the glass substrate))

7. A glass substrate, wherein
in a case where a predetermined area of an end surface is imaged with an imaging unit, and the imaged image is processed with white and black binarization to identify a recess that is present in the end surface and a flat portion that becomes a mirror surface of the end surface as a white image and a black image, respectively, a ratio of an area of the white image with respect to an area of the black image is 10% or less.

8. The glass substrate according to Claim 7, wherein
the predetermined area is an arbitrary area having dimensions of width: 100 $\mu$m $\times$ height: 50 $\mu$m within a region that has dimensions of depth: 10 mm $\times$ width: 20 mm and includes a central portion of an end surface processing region of the glass substrate in a traveling direction of a grindstone.

9. The glass substrate according to Claim 7 or 8, wherein:

a size is 400 mm $\times$ 300 mm or more;
a plate thickness (t) is 0.05 mm to 2.8 mm; and
a trapezoidal shape, which is created by drawing three tangential lines on the end surface having a chamfered portion, satisfies the following dimensions.

$$1/3 \leq 1-2\tan\beta \times W/t \leq 4/5$$

(here, $\beta$ represents an angle of aperture (an angle made by a tangential line of a chamfered curved surface of the end surface of the glass substrate at an intersection point between a plate surface of the glass substrate and the chamfered curved surface of the end surface of the glass substrate, and the plate surface of the glass substrate, and a range thereof is $50° \leq 2\beta \leq 80°$), and

W represents an end surface width (a length from the intersection point between the plate surface of the glass substrate and the chamfered curved surface of the end surface of the glass substrate to a tangential line drawn on a tip of the end surface of the glass substrate in a direction parallel with the plate surface of the glass substrate))

**FIG. 1**

FIG. 2

FIG. 3

## FIG. 4

FIG. 5

*FIG. 6*

FIG. 7

## FIG. 8

FIG. 9

EP 2 592 057 A1

*FIG. 10*

23

*FIG. 11*

## Fig. 12

## FIG. 13

## FIG. 14A

## FIG. 14B

## FIG. 15A

## FIG. 15B

## FIG. 16

## FIG. 17

## FIG. 18

## FIG. 19

## FIG. 20

## FIG. 21

## FIG. 22

## FIG. 23

## FIG. 24A

## FIG. 24B

<table>
<tr><td colspan="2" align="center">**INTERNATIONAL SEARCH REPORT**</td><td colspan="2">International application No.<br>PCT/JP2011/053749</td></tr>
</table>

| A. CLASSIFICATION OF SUBJECT MATTER |
|---|
| *C03C19/00*(2006.01)i, *G02F1/1333*(2006.01)i |
| According to International Patent Classification (IPC) or to both national classification and IPC |

| B. FIELDS SEARCHED |
|---|
| Minimum documentation searched (classification system followed by classification symbols)<br>C03C19/00, G02F1/1333, B24B9/00, B24B9/10 |
| Documentation searched other than minimum documentation to the extent that such documents are included in the fields searched<br>   Jitsuyo Shinan Koho      1922-1996   Jitsuyo Shinan Toroku Koho   1996-2011<br>   Kokai Jitsuyo Shinan Koho  1971-2011   Toroku Jitsuyo Shinan Koho   1994-2011 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br>A | JP 2001-259978 A (3M Innovative Properties Co.),<br>25 September 2001 (25.09.2001),<br>paragraphs [0003], [0004], [0013] to [0021], [0030] to [0035]<br>& JP 2003-525759 A     & US 2003/17788 A1<br>& EP 1268127 A     & WO 2001/066307 A2 | 5,7,8<br>1,2<br>3,4,6,9 |
| X<br>Y<br>A | JP 2005-52944 A (Hitachi Zosen Corp.),<br>03 March 2005 (03.03.2005),<br>claims; paragraphs [0002], [0008]<br>(Family: none) | 5,7,8<br>1,2<br>3,4,6,9 |
| Y | JP 2000-17417 A (Kawasaki Steel Corp.),<br>18 January 2000 (18.01.2000),<br>paragraph [0029]<br>(Family: none) | 1,2 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   12 May, 2011 (12.05.11) | Date of mailing of the international search report<br>   24 May, 2011 (24.05.11) |
|---|---|
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/053749 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2004-256838 A  (JFE Steel Corp.),<br>16 September 2004 (16.09.2004),<br>paragraphs [0048], [0050]<br>(Family: none) | 1,2 |
| A | JP 11-92170 A  (Nippon Electric Glass Co.,<br>Ltd.),<br>06 April 1999 (06.04.1999),<br>paragraphs [0014] to [0016]; fig. 1 to 4<br>(Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4370611 B
- JP 2002160147 A
- JP 9102122 A
- JP 2010155987 A